Europäisches Patentamt

(19) European Patent Office

Office européen des brevets

(11) Numéro de publication : **0 177 415**
**B1**

(12) **FASCICULE DE BREVET EUROPÉEN**

(45) Date de publication du fascicule du brevet :
17.05.89

(51) Int. Cl.⁴ : **G 11 B 33/04**

(21) Numéro de dépôt : 85401881.9

(22) Date de dépôt : 26.09.85

(54) **Boîte pour le rangement, la présentation et la sélection des disquettes ou autres supports magnétiques.**

(30) Priorité : 01.10.84 FR 8415063

(43) Date de publication de la demande :
09.04.86 Bulletin 86/15

(45) Mention de la délivrance du brevet :
17.05.89 Bulletin 89/20

(84) Etats contractants désignés :
AT BE CH DE GB IT LI NL SE

(56) Documents cités :
EP—A— 0 001 353
EP—A— 0 050 485
WO—A—82 /018 10
FR—A— 2 307 172
FR—A— 2 403 279
GB—A— 1 462 438
GB—A— 2 091 219
GB—A— 2 132 588
US—A— 3 360 116
US—A— 4 356 918
US—A— 4 401 216

(73) Titulaire : **Posso S.A.**
**121, Avenue d'Italie**
**F-75013 Paris (FR)**

(72) Inventeur : **Posso, Patrick**
**10 Avenue Jurigoz**
**CH-1006 Lausanne (CH)**

(74) Mandataire : **Caunet, Jean et al**
**Cabinet BEAU DE LOMENIE 55, rue d'Amsterdam**
**F-75008 Paris (FR)**

Jouve, 18, rue St-Denis, 75001 Paris, France

## Description

La présente invention concerne une boîte pour le rangement de supports magnétiques tels que des disquettes, des cartes ou autres. En général, ces supports sont utilisés dans une commande de mémoire, telle qu'un lecteur à disque, une machine à écrire a traitement de texte etc...

La boîte dans laquelle ces supports sont rangés doit être étanche pour protéger ceux-ci contre les poussières ou autres agents extérieurs pouvant perturber les données magnétiques. Elle doit aussi être organisée pour présenter au mieux les supports pendant une recherche et pour faciliter la sélection, opérations qui sont exécutées lorsque la boîte est ouverte et sans que lesdits supports dans leur ensemble en soient extraits. Elle doit enfin être produite au prix le plus faible possible.

La demande de brevet français n° 2.498.357 décrit un coffret pour le rangement de disquettes. Ce coffret comprend un corps constitué par un fond, des côtés et un devant. Il comprend également un couvercle constitué par un dessus, des côtés, un dos et une console délimitant entre eux un réceptacle pour les disquettes, la console étant échancrée pour présenter des dégagements d'accès en haut, latéralement et au milieu. Le corps et le couvercle sont en matière plastique moulée et forment un ensemble monolithique étant donné que le dos du couvercle est relié au fond du corps par une charnière continue venue de moulage. En outre, la console est fixée aux côtés du couvercle par des pattes s'emboîtant dans des encoches et ces côtés du couvercle sont reliés aux côtés du corps par des moyens permettant de limiter l'ouverture du couvercle et de l'immobiliser dans cette position. Lorsque la boîte est ouverte, le fond du corps repose sur le meuble de bureau et l'inclinaison du couvercle est dirigée vers l'avant afin d'accéder au réceptacle délimité par ce couvercle et la console sur laquelle s'appuient alors les disquettes.

L'inconvénient de ce coffret est que la lisibilité des disquettes et leur sélection sont relativement malcommodes, au point que l'utilisateur est tenté de toutes les extraires pour remettre en place ensuite celles qui restent. Il en découle une perte de temps, un risque de détérioration desdites disquettes et un énervement inutile du personnel. En outre, ce coffret est relativement coûteux, en raison de l'existence de la console, bien qu'il soit moulable sensiblement à plat grâce à une charnière continue entre le dessus et le dos du couvercle.

Le brevet français n° 2.456.671 décrit une boîte pour le conditionnement d'une cassette magnétique. Cette boîte comprend un corps constitué par un fond, des côtés, un dos et une partie de dessus postérieure délimitant entre eux un réceptacle qui pourrait contenir des disquettes. Elle comprend également un couvercle constitué par une partie de dessus antérieure, des côtés et un devant. Le corps et le couvercle sont en matière plastique moulée et sont assemblés entre eux pour former un ensemble monolithique qui est cependant ouvrable, étant donné que les parties de dessus postérieure du corps et antérieure du couvercle sont reliées entre elles par une charnière continue venue de moulage.

Toutefois, cette boite ne comporte pas de moyen permettant de déterminer l'ouverture du couvercle et de le maintenir incliné, de sorte que, si des disquettes étaient rangées dans cette boîte, elles ne pourraient pas être présentées de façon lisible et accessible, ni maintenues pendant une sélection. Mais il est intéressant de noter qu'elle est moins coûteuse que le coffret précité.

Le brevet US n° 3.380.116 décrit un coffret pour rasoir électrique. Ce coffret comprend un corps et un couvercle articulés l'un sur l'autre au moyen de tourillons latéraux alignés. Le dos du couvercle est relativement haut et peut servir de base de repos sur un support tel qu'une table. Dans cette position stable, le couvercle est vertical et le corps est faiblement incliné sur l'horizontale. Le corps présente donc en faible pente le rasoir électrique et, si à la place de celui-ci, des disquettes étaient rangées, elles ne seraient ni lisibles, ni accessibles. En outre, en l'absence de moyen de verrouillage entre le corps et le couvercle lorsque le coffret est ouvert, ce coffret risque de se refermer inopinément sur le rasoir, ce qui serait dommageable si des disquettes rangées à la place se trouvaient en cours de tri.

La présente invention a pour but de remédier aux inconvénients de ces trois conteneurs connus.

Dans ce but et conformément à l'invention, la boîte comprend un corps formant réceptacle pour les disquettes constitué par un fond, des côtés, un dos et une partie de dessus postérieure, d'autre part, un couvercle constitué par une partie de dessus antérieure, des côtés et un devant, les parties de dessus antérieure et postérieure étant reliées entre elles par une charnière continue intégrée et les côtés du corps et du couvercle se recouvrant mutuellement. Elle comprend également des moyens de verrouillage formés aux côtés du corps et du couvercle et permettant de verrouiller le couvercle ouvert dans une position prédéterminée ; dans cette position d'ouverture, le couvercle est incliné suivant un angle obtus par rapport à la position de fermeture, de façon que, dans ladite position d'ouverture et lorsque la boîte repose sur un support par les arêtes opposées du dos de son corps et du dessus de son couvercle, les disquettes contenues dans le réceptacle soient elles-mêmes inclinées vers l'arrière.

Suivant une forme de réalisation particulièrement avantageuse, les moyens de verrouillage sont constitués par au moins un ergot faisant saillie indifféremment sur un côté du couvercle ou un côté du corps et coopérant avec un trou ménagé dans le côté conjugué ; le côté considéré du couvercle est muni d'un prolongement vers l'arrière au-delà de la charnière pour présenter l'un des éléments de verrouillage (ergot ou trou), tandis que le côté conjugué du corps présente en avant de la charnière l'autre élément de verrouillage (trou ou ergot), de façon que la ligne fictive passant par la charnière et l'élément de verrouillage du prolongement du côté du couvercle forme avec la partie de dessus antérieure de ce couvercle un angle obtus (A) qui, déduction faite de l'angle aigu (B) que forme la ligne fictive passant par la charnière et l'élément de verrouillage du côté du corps avec le fond de ce corps, correspond à l'inclinaison précitée (C) du couvercle vers l'arrière.

Par ailleurs, le bord du ou des trous additionnels coopérant avec le ou les ergots lorsque la boîte est fermée, présente une rampe inclinée de déverrouillage de ce ou ces ergots lors du pivotement d'ouverture du couvercle.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :

la figure 1 est une perspective montrant la boîte, conforme à l'invention, en position ouverte de présentation,

la figure 2 est une coupe antéro-postérieure prise suivant la ligne II-II de la figure 1,

la figure 3 est une coupe partielle prise suivant la ligne III-III de la figure 1, la boîte étant fermée,

la figure 4 est une élévation latérale de la boîte selon la figure 1, boîte qui est alors verrouillée en position de fermeture,

la figure 5 est une vue analogue à la figure 1 illustrant la boîte, issue monobloc de démoulage avant montage.

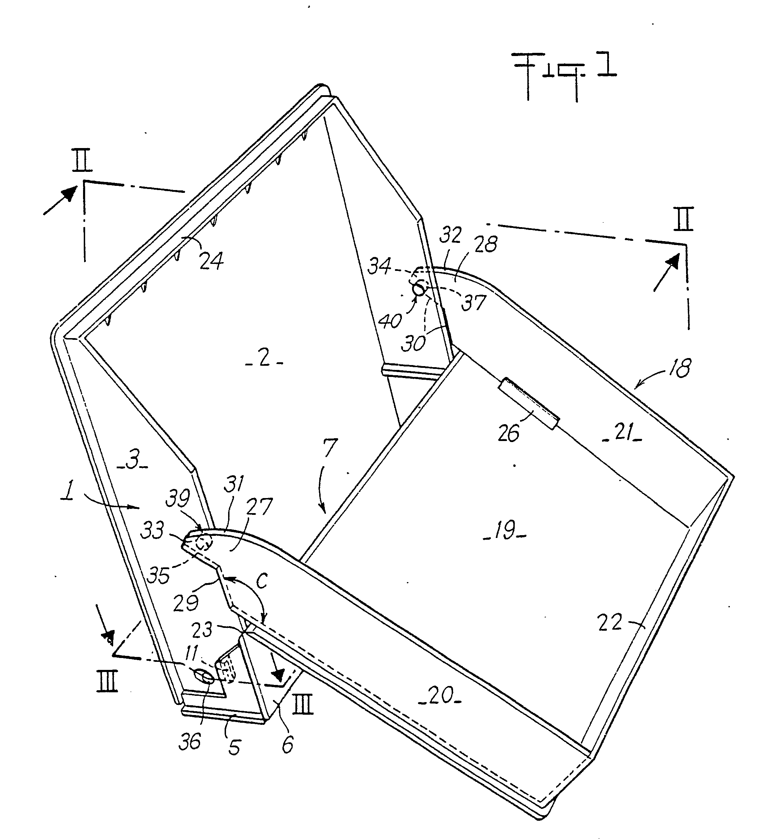

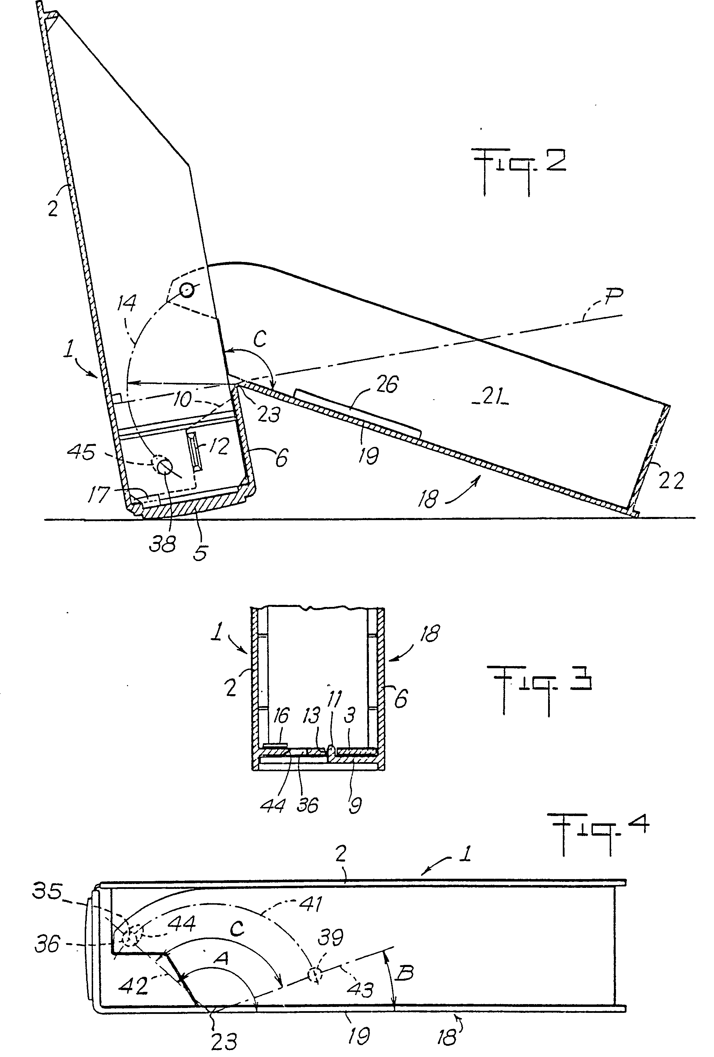

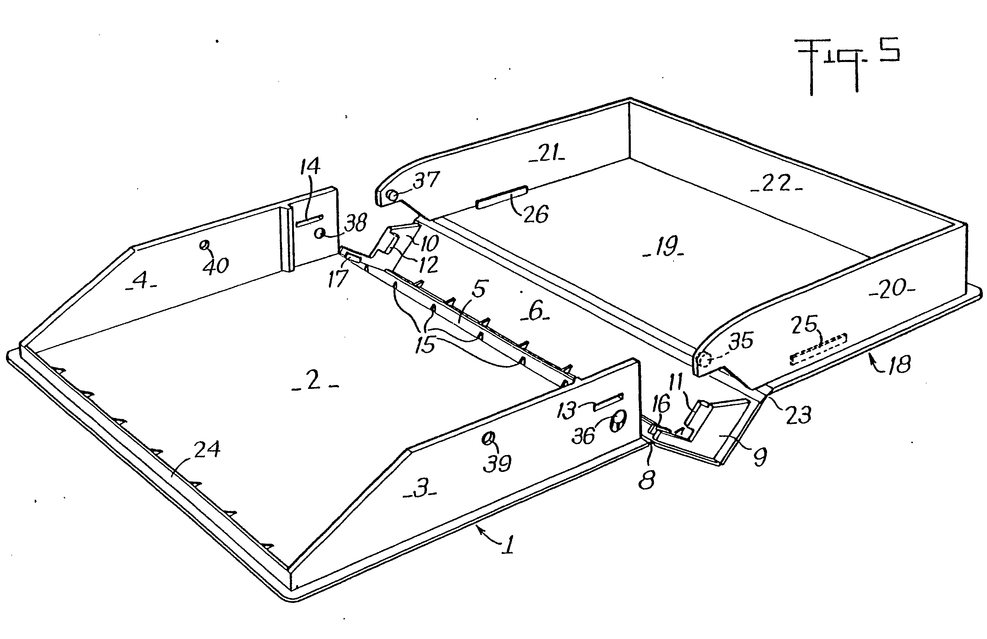

Comme le montrent les figures 1 et 5, la boîte comporte un corps 1 constitué par un fond 2, des côtés 3, 4, un dos 5 et une partie de dessus postérieure 6. Lorsque la boîte est fermée et placée à plat sur un support, elle repose sur celui-ci par le dessus 19 (figure 4) ou le fond 2.

Tous ces éléments 2 à 6 sont en matière plastique et venus de moulage, ainsi que cela ressort de la figure 5, sensiblement à plat. Ils sont assemblés entre eux de façon rigide pour former un réceptacle 7 destiné à recevoir les disquettes. A cet effet, le dos 5 et le fond 2 sont reliés de façon pivotante l'un à l'autre, par une charnière continue 8 qui est, en fait, une partie amincie desdites parois ; par ailleurs, le dos 5 et la partie de dessus postérieure 6 sont reliés l'un à l'autre, de façon rigide, par des équerres 9, 10 venues de moulage ; ces équerres présentent en saillie vers l'intérieur des dents de verrouillage 11, 12 destinées à coopérer avec des fentes 13, 14 ménagées dans les côtés 3, 4 pour assembler lesdites équerres 9, 10 contre les côtés 3, 4 lorsque, par pivotement autour de la charnière continue 8, le dos 5 se place perpendiculairement au fond 2 ; dans cette position qui se trouve matériellement définie par des butées triangulaires 15, l'assemblage ainsi réalisé est bloqué par des nervures 16, 17 se plaçant, lors du pivotement précité, à l'intérieur des côtés 3, 4 alors que les équerres 9, 10 se placent à l'extérieur ; l'assemblage par les dents 11, 12 et les fentes 13, 14 s'obtient évidemment par déformation élastique des parties concernées 3, 4, 9 et 10 (figure 3).

Le corps 1, bien que moulé sensiblement à plat (figure 5), est monobloc et rigide lorsque l'assemblage est réalisé (figure 1). Il forme le réceptacle 7 apte à contenir des disquettes ou autres supports magnétiques et à les maintenir empilés.

Les figures 1 et 5 montrent que la boîte comporte également un couvercle 18 constitué par une partie de dessus antérieure 19, des côtés 20, 21 et un devant 22. Tous ces éléments 19 à 22 sont en matière plastique, la même que celle du corps 1, et venus de moulage sensiblement à plat avec ce corps dans un moule commun (figure 5).

Le couvercle 18 est relié audit corps 1, de façon pivotante, par une charnière continue 23 est qui, en fait, un amincissement des parties de dessus 6 et 19.

Lorsque la boîte est fermée (figure 4), les côtés 20 et 21 du couvercle 18 s'étendent à l'extérieur et contre les côtés 3 et 4 du corps 1 ; de façon analogue, le devant 22 du couvercle s'emboîte à l'extérieur d'une réglette 24 reliant ensemble le fond 2 et les côtés 3, 4 du corps 1. Ainsi, en position de fermeture, la boîte est étanche et protège parfaitement contre la pénétration de corps étrangers tels que de la poussière ou autre, les disquettes qu'elle contient ; toutefois, pour que le maintien en contact des côtés 3, 4 et 20, 21 soit parfait, la boîte étant fermée, la partie de dessus antérieure 19 du couvercle présente en saillie, à l'intérieur des côtés 20, 21, des nervures 25, 26, les côtés 3, 4 du corps devant s'emboîter entre ces éléments 20 et 25, 21 et 26.

Ainsi que cela ressort de la figure 1 et plus précisément des figures 2 et 4, les côtés 20 et 21 s'étendent au-delà de la charnière continue 23 et forment des prolongements 27 et 28 respectivement prenant place, lorsque la boîte est fermée, dans les équerres 9, 10. Ainsi, le bord supérieur 29, 30 desdits prolongements est brisé en angle obtus et leur bord inférieur 31, 32 est arqué concentriquement à la charnière 23, ces bords 29 et 31, 30 et 32 délimitant un bec 33, 34 avancé vers l'arrière et en-dessous de ladite charnière, la boîte étant fermée.

Le moyen de verrouillage de la boîte en position de fermeture est localisé dans chacun de ces becs 33, 34. Dans l'exemple représenté, il est constitué, pour le bec 33 du couvercle, par un ergot 35 faisant saillie à l'intérieur et susceptible de coopérer avec un trou 36 ménagé dans le côté 3 du corps 1 et, pour le bec 34 dudit couvercle, par un ergot 37 faisant saillie à l'intérieur et susceptible de coopérer avec un trou 38 ménagé dans le côté 4 dudit corps.

Le même moyen de verrouillage permet de définir la position d'ouverture de la boîte illustrée par les figures 1 et 2. Dans cette position dans laquelle la boîte repose sur un support, non plus par le dessus 19 (ou le fond 2) comme lorsqu'elle est fermée (figure 4), mais par les arêtes opposées du dos 5 de son corps et du dessus 19 de son couvercle 18 e couvercle 18 est incliné vers l'arrière par rapport au plan p perpendiculaire au fond 2 passant par la charnière 23, le fond étant supposé en appui sur le support comme dans la position de fermeture. La partie de dessus antérieure 19 du couvercle 18 forme avec le fond 2 du corps 1 (ou le bord supérieur des côtés 3, 4 qui lui est parallèle) un angle obtus C. Ainsi, les disquettes logées dans le réceptacle 2 à 6 se trouvent-elles adossées à ladite partie de dessus 19 du couvercle et inclinées vers l'arrière de sorte qu'elles peuvent être facilement compulsées une à une.

Les ergots 35 et 37 coopèrent alors avec des trous 39 et 40 ménagés dans les côtés 3 et 4 du corps 1 en avant de la charnière continue 23 et près du bord supérieur desdits côtés.

Il est important de noter que les trous 36 et 39 (figure 4) sont parfaitement définis l'un par rapport à l'autre. Ils sont situés à la même distance de la charnière 23, c'est-à-dire sur un arc de cercle 41 concentrique à celle-ci ; en outre, l'angle que forment leurs rayons polaires 42 et 43 est justement égal à l'angle C précité d'ouverture du couvercle 18 ; en d'autres termes, la différence entre l'angle A du rayon polaire 42 par rapport à la partie de dessus 19 du couvercle fermé et l'angle B du rayon polaire 43 par rapport à la même partie 19 est égale à l'angle d'ouverture C.

Pour déverrouiller le couvercle 18 lorsqu'il est ouvert, il suffit de faire fléchir à la main, par déformation élastique, les becs 33 et 34 afin de dégager les ergots 35 et 37.

Pour déverrouiller le couvercle 18 lorsqu'il est fermé, il suffit de l'écarter du corps 1 en forçant à l'avant ; en effet, les trous 36 (figure 4) et 38 (figure 2) débouchent à l'extérieur des côtés 3 et 41 du corps 1 par des rampes inclinées 44 et 45 respectivement, s'étendant tangentiellement à la trajectoire circulaire 41 décrite par les ergots 35 et 37 lors de l'ouverture ; ces rampes inclinées 44 et 45 provoquent, lors de l'ouverture forcée du couvercle, le dégagement automatique desdits ergots et ainsi le déverrouillage.

Bien entendu, les ergots 35, 37 peuvent être formés en saillie à l'extérieur des côtés 3, 4 du corps 1 pour coopérer, chacun, avec deux trous ménagés dans les côtés prolongés 20, 27 et 21, 28, ces trous étant écartés angulairement par rapport à la charnière 23 de l'angle C.

Quelle que soit la réalisation choisie, il n'est pas nécessaire que l'ergot de verrouillage en position ouverte soit confondu avec l'ergot de verrouillage en position fermée.

## Revendications

1. Boîte pour le rangement, la présentation et la sélection des disquettes ou autres supports magnétiques, comprenant, d'une part, un corps (1) formant réceptable pour les disquettes constitué par un fond (2), des côtés (3, 4), un dos (5) et une partie de dessus postérieure (6), d'autre part, un couvercle (18) constitué par une partie de dessus antérieure (19), des côtés (20, 21) et un devant (22), les parties de dessus antérieure (19) et postérieure (6) étant reliés entre elles par une charnière continue intégrée (23) et les côtés du corps et du couvercle se recouvrant mutuellement, caractérisée en ce qu'elle comporte également des moyens de verrouillage formés aux côtés du corps et du couvercle (35, 37, 39, 40) et permettant de verrouiller le couvercle ouvert dans une position prédéterminée et en ce que, dans cette position d'ouverture, le couvercle est incliné suivant un angle obtus (C) par rapport à la position de fermeture, de façon que, dans ladite position d'ouverture et lorsque la boite repose sur un support (50) par les arêtes opposées du dos (5) de son corps et du dessus (19) de son couvercle, les disquettes contenues dans le réceptacle soient elles-mêmes inclinées vers l'arrière.

2. Boîte selon la revendication 1, caractérisée en ce que les moyens de verrouillage sont constitués, par au moins un ergot (35, 37) faisant saillie indifféremment sur un côté (20, 21) du couvercle (18) ou un côté (3, 4) du corps (1) et coopérant avec un trou (39, 40) ménagé dans le côté conjugué et en ce que le côté considéré (20, 21) du couvercle (18) est muni d'un prolongement (27, 28) vers l'arrière au-delà de la charnière (23) pour présenter l'un (35, 37) des éléments de verrouillage (ergot ou trou), tandis que le côté conjugué (3, 4) du corps (1) présente en avant de la charnière (23) l'autre élément (39, 40) de verrouillage (trou ou ergot), de façon que la ligne fictive (42) passant par la charnière (23) et l'élément de verrouillage (35, 37) du prolongement du côté (20, 21) du couvercle (18) forme avec la partie de dessus antérieure (19) de ce couvercle un angle obtus (A) qui, déduction faite de l'angle aigu (B) que forme la ligne fictive (43) passant par la charnière (23) et l'élément de verrouillage (39, 40) du côté (3, 4) du corps (1) avec le fond (2) de ce corps, correspond à l'inclinaison précitée (C) du couvercle vers l'arrière.

3. Boîte selon la revendication 2, caractérisée en ce que le bord du ou des trous (36, 38) additionnels coopérant avec le ou les ergots (35, 37) lorsque la boîte est fermée, présente une rampe inclinée (44, 45) de déverrouillage de ce ou ces ergots lors du pivotement d'ouverture du couvercle.

## Claims

1. Box for the storage, display and selection of diskettes or other magnetic members, comprising on the one hand a body (1) forming a receptacle for receiving diskettes, constituted by a base (2), side walls (3, 4), a back part (5) and a rear upper part (6), on the other hand, and a lid (18) constituted by a front upper part (19), side walls (20, 21) and a frontal part (22), said back (6) and front (49) upper parts being joined together by a continuous integral hinge (23), and the said walls of the body and of the lid being in mutual overlapping relation, characterized in that it further comprises locking means formed on the sides of the body and of the lid (35, 37, 39, 40) and permitting locking of the open lid in a predetermined position, and in that, in said opening position, the lid is tilted back, forming an obtuse angle (C), with respect to the closing position, so that, in said opening position and when the box rests on a support (50) by the opposite edges of the back part (5) of its body and of the upper part (19) of its lid, the diskettes stored in the receptacle are likewise tilted back.

2. Box according to claim 1, characterized in that the locking means are constituted, by at least one pin (35, 37) projecting indifferently on one side (20, 21) of the lid (16) or on one side (3, 4) of the body (1), and cooperating with a hole (39, 40) provided in the conjugated side, and in that the considered side (20, 21) of the lid (18) is provided with a portion (27, 28) extending rearwards beyond the hinge (23) in order to present one (35, 37) of the locking elements (pin or hole), whereas the conjugated side (3, 4) of the body (1) presents, in the front of the hinge (23), the other locking element (39, 40) (hole or pin), so that the fictitious line (42) traversing the hinge (23) and the locking element (35, 37) of the extension on the side (20, 21) of the lid (18), forms with the front upper part (19) of said lid, an obtuse angle (A) which, having deducted the acute angle (B) formed by the fictitious line (43) traversing the hinge (23) and the locking element (39, 40) on the side (3, 4) of the body (1), with the base (2) of said body, corresponds to the aforesaid inclination (C) of the lid.

3. Box according to claim 2, characterized in that the edge of the additional hole or holes (36, 38) cooperating with the pin or pins (35, 37) when the box is closed, presents an inclined unlocking ramp (44, 45) for said pin or pins when the lid is pivotally opened.

**Patentansprüche**

1. Behälter zur Lagerung, Präsentation und Auswahl von Disketten oder anderen Magnetträgern, umfassend einerseits einen eine Aufnahme für die Disketten bildenden Körper (1), bestehend aus einem Boden (2), Seiten (3, 4), einem Rücken (5) und einem hinteren Oberteil (6), anderseits einen Deckel (18), bestehend aus einem vorderen Oberteil (19), Seiten (20, 21) und einem Vorderteil (22), wobei der vordere (19) und der hintere (6) Oberteil durch ein integriertes durchgehendes Scharnier (23) miteinander verbunden sind und die Seiten des Körpers und des Deckels einander gegenseitig überdecken, dadurch gekennzeichnet, daß er weiters Verriegelungsmittel umfaßt, die an den Seiten des Körpers und des Deckels (35, 37, 39, 40) ausgebildet sind und die Verriegelung des offenen Deckels in einer bestimmten Position gestatten, und daß der Deckel in dieser Öffnungsposition in einem stumpfen Winkel (C) zur Schließstellung geneigt ist, sodaß in der Öffnungsposition und bei Auflage des Behälters auf einem Träger (50) mit den gegenüberliegenden Kanten des Rückens (5) seines Körpers und des Oberteils (19) seines Deckels die in der Aufnahme enthaltenen Disketten selbst nach hinten geneigt sind.

2. Behälter nach Anspruch 1, dadurch gekennzeichnet, daß die Verriegelungsmittel durch mindestens einen Stift (35, 37) gebildet sind, der in gleicher Weise an einer Seite (20, 21) des Deckels (18) oder an einer Seite (3, 4) des Körpers (1) vorragt und mit einem in der zugehörigen Seite vorgesehenen Loch (39, 40) zusammenwirkt, und daß die betreffende Seite (20, 21) des Deckels (18) mit einer Verlängerung (27, 28) nach hinten über das Scharnier (23) hinaus zwecks Bildung eines (35, 37) der Verriegelungselemente (Stift oder Loch) versehen ist, während die zugehörige Seite (3, 4) des Körpers (1) vor dem Scharnier (23) das andere Verriegelungselement (39, 40) (Loch oder Stift) bildet, sodaß die gedachte Linie (42), die durch das Scharnier (23) und das Verriegelungselement (35, 37) der Verlängerung der Seite (20, 21) des Deckels (18) durchgeht, mit dem vorderen Oberteil (19) des Deckels einen stumpfen Winkel (A) einschließt, der abzüglich des von der durch das Scharnier (23) und das Verriegelungselement (39, 40) der Seite (3, 4) des Körpers (1) durchgehenden gedachten Linie (43) mit dem Boden (2) dieses Körpers gebildeten spitzen Winkels (B) der vorgenannten Neigung (C) des Deckels nach hinten entspricht.

3. Behälter nach Anspruch 2, dadurch gekennzeichnet, daß der Rand des oder der zusätzlichen Lochs/Löcher (36, 38), das/die bei geschlossenem Gehäuse mit dem oder den Stift(en) (35, 37) zusammenwirkt (en), eine geneigte Verriegelungsrampe (44, 45) dieses/dieser Stiftes bzw. Stifte bei Verschwenken des Deckels in die Öffnungsposition bildet (bilden).

Fig. 1

Fig.2

Fig.3

Fig.4

2

Fig. 5

EP 0 177 415 B1